## Europäisches Patentamt

## European Patent Office

## Office européen des brevets

(19)

(11) Veröffentlichungsnummer: **0 123 895**
**B1**

(12) # EUROPÄISCHE PATENTSCHRIFT

(45) Veröffentlichungstag der Patentschrift:
**07.01.87**

(51) Int. Cl.⁴: **G 01 B 21/02**

(21) Anmeldenummer: **84103336.8**

(22) Anmeldetag: **27.03.84**

(54) **Messeinrichtung.**

(30) Priorität: **03.05.83 DE 3316082**

(43) Veröffentlichungstag der Anmeldung:
**07.11.84 Patentblatt 84/45**

(45) Bekanntmachung des Hinweises auf die Patenterteilung:
**07.01.87 Patentblatt 87/2**

(84) Benannte Vertragsstaaten:
**AT CH DE FR GB IT LI NL SE**

(56) Entgegenhaltungen:
**DE - A - 3 106 701**

(73) Patentinhaber: **Dr. Johannes Heidenhain GmbH, Nansenstrasse 17, D-8225 Traunreut (DE)**

(72) Erfinder: **Affa, Alfred, Ing. grad., Hochfellnstrasse 6, D-8221 Stein (DE)**

## Beschreibung

Die Erfindung betrifft eine Messeinrichtung gemäss dem Oberbegriff des Anspruches 1.

Aus der DE-A1-3 106 701 ist eine Messeinrichtung zum Messen oder Einstellen der Relativlage zweier Maschinenteile einer Werkzeugmaschine mit einem am ersten Maschinenteil befestigten Massstab und mit einer am zweiten Maschinenteil befestigten Abtasteinheit zur Abtastung des Massstabs bekannt. Ein Dehnstab mit einem hohen thermischen Ausdehnungskoeffizienten ist mit dem einen Ende am ersten Maschinenteil und mit dem anderen Ende an dem einen Ende des Massstabs befestigt; der Massstab ist mit dem anderen Ende axial verschiebbar am ersten Maschinenteil gehalten. Die wirksame freie Länge des Dehnstabes zwischen den Befestigungspunkten am ersten Maschinenteil und am Massstab ist so gewählt, dass in einem gegebenen Temperaturbereich die Wärmedehnung des Dehnstabes zur Verschiebung des Massstabs etwa gleich der Wärmedehnung des ersten Maschinenteils zur Kompensation dieser Wärmedehnung des ersten Maschinenteils ist.

Insbesondere bei Bearbeitungsmaschinen besteht mitunter die Notwendigkeit, eine Messeinrichtung zum Messen oder Einstellen der Relativlage zwischen einem Werkzeug und einem Werkstück an einem Maschinenteil zu befestigen, das sich beim Betrieb der Maschine im Gegensatz zum Werkstück, das gemessen oder bearbeitet werden soll, stark erwärmt. In diesem Fall erwärmt sich ebenfalls der Massstab der Messeinrichtung und dehnt sich aus, so dass Messfehler die Folge sind. Eine derartige Messeinrichtung müsste mit einem Massstab aus einem Material mit vernachlässigbar kleinem thermischem Ausdehnungskoeffizienten ausgerüstet sein; ein solcher Massstab aus Quarzglas oder Invar ist aber relativ teuer.

Der Erfindung liegt die Aufgabe zugrunde, eine Messeinrichtung der oben genannten Gattung anzugeben, bei der die Messgenauigkeit auch bei einer Erwärmung des Massstabs mit endlichem thermischem Ausdehnungskoeffizienten erhalten bleibt.

Diese Aufgabe wird erfindungsgemäss durch die kennzeichnenden Merkmale des Anspruchs 1 gelöst.

Die mit der Erfindung erzielten Vorteile bestehen insbesondere darin, dass bei der vorgeschlagenen Messeinrichtung mit einfachen Mitteln eine Kompensation thermischer Längenänderungen des Massstabs ermöglicht wird, so dass bei einer solchen Messeinrichtung keine speziellen Massstäbe eingesetzt werden müssen, was zu einer erheblichen Verteuerung der Messeinrichtung führen würde.

Vorteilhafte Ausbildungen der Erfindung entnimmt man den Unteransprüchen.

Ausführungsbeispiele der Erfindung werden anhand der Zeichnung näher erläutert.

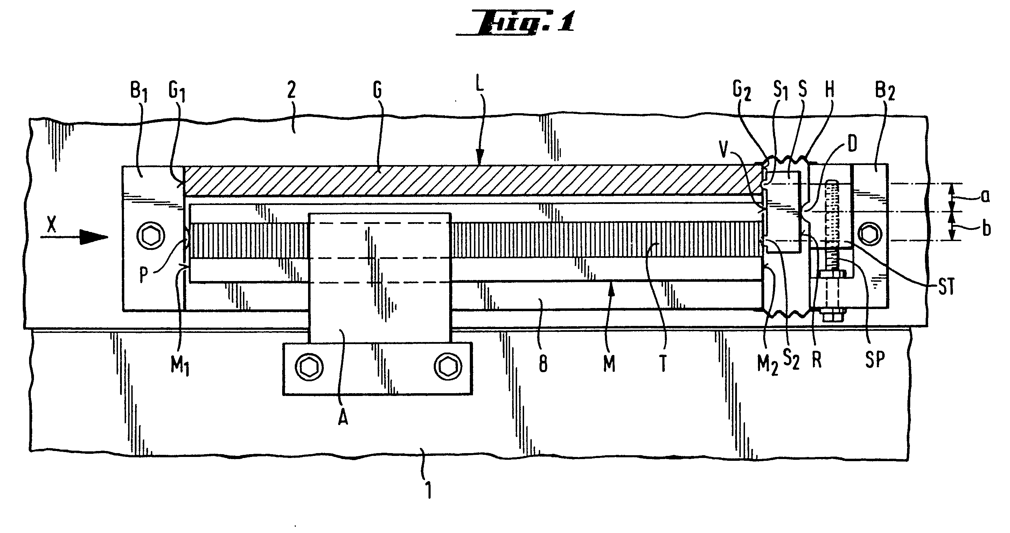

In Fig. 1 ist eine Werkzeugmaschine mit einem Maschinenbett 1 dargestellt, auf dem ein Schlitten 2 in X-Richtung horizontal verschiebbar geführt ist. Zur Messung der Relativlage zwischen dem Schlitten 2 und dem Maschinenbett 1, bzw. zwischen einem Werkzeug und einem Werkstück, die nicht dargestellt sind, ist am Schlitten 2 eine Längenmesseinrichtung L angeordnet.

Die Längenmesseinrichtung L besteht aus einem Massstabträger in Form eines Gehäuses G, in dessem Inneren ein Massstab M mit einer Teilung T mittels einer nicht gezeigten elastischen Klebeschicht befestigt ist, die eine gewisse Verschiebung des Massstabs M in X-Richtung (Messrichtung) relativ zum Gehäuse G zulässt. Das Gehäuse G ist über zwei Befestigungselemente $B_1$, $B_2$ am Schlitten 2 befestigt und weist einen von nicht gezeigten Dichtelementen verschlossenen Längsschlitz 8 auf, durch den eine am Maschinenbett 1 befestigte Abtasteinheit A zur Abtastung der Teilung T des Massstabs M mit bekannten Mitteln hindurchgreift.

Zur Kompensation von thermischen Längenänderungen des Massstabs M infolge einer Erwärmung des Schlittens 2 gegenüber der Umgebungstemperatur, die durch den Antrieb, das Getriebe und die Lagerung des Schlittens 2 hervorgerufen wird, ist das Gehäuse G als Dehnelement mit dem einen Ende $G_1$ direkt mit dem ersten Befestigungselement $B_1$ und mit dem anderen Ende $G_2$ über ein im zweiten Befestigungselement $B_2$ gelagertes Schwenkelement S mit dem benachbarten Ende $M_2$ des Massstabs M verbunden. Dieses Schwenkelement S weist an einer Vorderseite V zwei Vorsprünge $S_1$, $S_2$ auf, die in entsprechende Ausnehmungen in den Enden $G_2$, $M_2$ des Gehäuses G und des Massstabs M eingreifen, und steht mit einer ebenen Rückseite R mit einem Vorsprung D des Befestigungselements $B_2$ in Kontakt; der Vorsprung D dient als Drehpunkt für das Schwenkelement S. Das Befestigungselement $B_2$ wird so am Schlitten 2 angebracht, dass es spielfrei über das Schwenkelement S mit dem Gehäuse G und dem Massstab M verbunden ist. Das andere Ende $M_1$ des Massstabs M steht mit einem Anschlag P des ersten Befestigungselements $B_1$ in Kontakt.

Bei einer Erwärmung des Schlittens 2 gegenüber der Temperatur des Werkstücks beim Betrieb der Werkzeugmaschine erfahren auch das Gehäuse G und der Massstab M die gleiche Temperaturerhöhung. Da aber das Gehäuse G, beispielsweise aus Aluminium, einen wesentlich grösseren thermischen Ausdehnungskoeffizienten $\alpha_G$ gegenüber dem thermischen Ausdehnungskoeffizienten $\alpha_S$ des Schlittens 2, beispielsweise aus Stahl oder Stahlguss, besitzt, verschiebt sich das Ende $G_2$ des Gehäuses G in positiver X-Richtung relativ zum Drehpunkt D des Befestigungselements $B_2$, so dass infolge der Schwenkbewegung des Schwenkelements S der Vorsprung $S_2$ den Massstab M in negativer X-Richtung gegen den Anschlag P des ersten Befestigungselements $B_1$ drückt. Bei richtig eingestelltem Schwenkverhältnis bleibt die ursprüngliche Messlänge des Massstabs M durch diese Stauchung bei wechselnden Temperaturen erhalten. Das richtige Schwenkverhältnis ist gegeben durch $a/b = (\alpha_G - \alpha_S)/\alpha_S$, wobei $\alpha_G$ der thermische Ausdehnungskoeffizient des Gehäuses G als Dehnelement und $\alpha_S$ der thermische Ausdehnungskoeffizient des Schlittens 2 sind. Mit a sind der Abstand zwischen dem Vorsprung $S_1$ und dem Drehpunkt D und mit b der Abstand des Vorsprungs $S_2$ vom Drehpunkt D senkrecht zur X-Richtung bezeichnet.

Um die Längenmesseinrichtung L auch bei Maschinenteilen mit unterschiedlichen thermischen Ausdehnungskoeffizienten einsetzen zu können, ist das Schwenkverhältnis a/b des Schwenkelements S durch ein Einstellelement ST einstellbar, das den Vorsprung D aufweist und in einer Führung des Befestigungselements $B_2$ senkrecht zur Messrichtung X mittels einer Spindel SP verschiebbar ist. Zur Kapselung gegenüber Verunreinigungen ist zwischen dem Befestigungselement $B_2$ und dem Ende $G_2$ des Gehäuses G ein Balg H angeordnet.

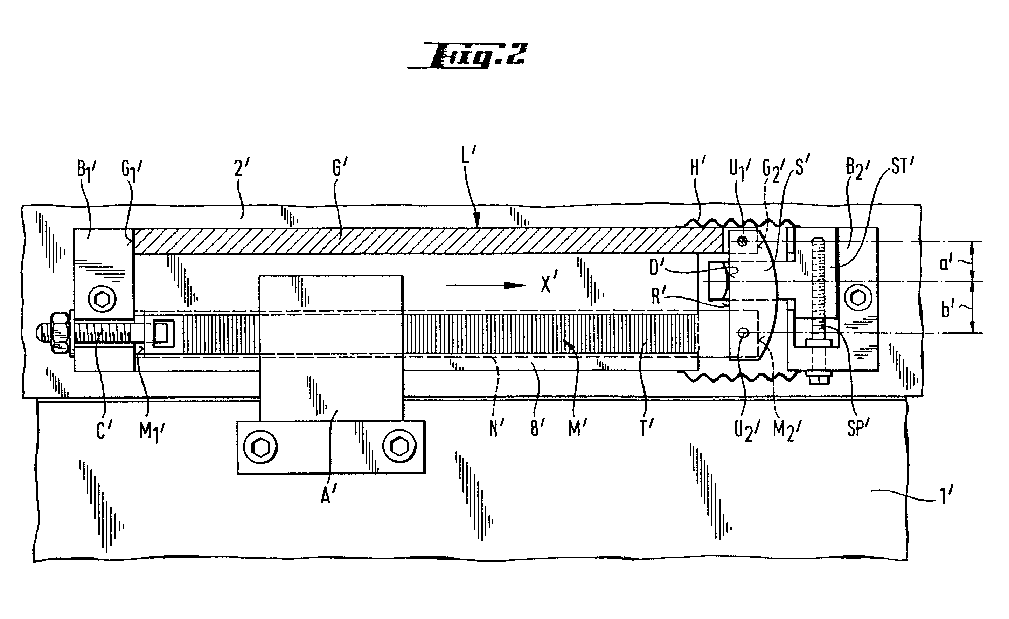

In Fig. 2 ist eine Werkzeugmaschine mit einer Längenmesseinrichtung L' dargestellt, deren gleichartige Elemente die gleichen, aber oben gestrichenen Bezugszeichen aufweisen.

Die Längenmesseinrichtung L' besteht aus einem Massstabträger in Form eines Gehäuses G', in dessen Inneren ein Massband M' mit einer Teilung T' in einer Nut N' in X'-Richtung (Messrichtung) relativ zum Gehäuse G' verschiebbar ist. Das Gehäuse G' ist über zwei Befestigungselemente $B_1$', $B_2$' am Schlitten 2' befestigt und weist einen von nicht gezeigten Dichtlippen verschlossenen Längsschlitz 8' auf, durch den eine am Maschinenbett 1' befestigte Abtasteinheit A' zur Abtastung der Teilung T' des Massbandes M' hindurchgreift.

Zur Kompensation von thermischen Längenänderungen des Massbandes M' infolge einer Erwärmung des Schlittens 2' gegenüber der Umgebungstemperatur ist das Gehäuse G' als Dehnelement mit dem einen Ende $G_1$' direkt mit dem ersten Befestigungselement $B_1$ und mit dem anderen Ende $G_2$' über ein im zweiten Befestigungselement $B_2$' gelagertes Schwenkelement S' mit dem benachbarten Ende $M_2$' des Massbandes M' über jeweils ein Gelenk $U_1$', $U_2$' verbunden. Dieses Schwenkelement S' steht mit einer dem Massband M' zugewandten ebenen Rückseite R' mit einem Vorsprung D' eines Einstellelements ST' in Kontakt, das in einer Führung des Befestigungselements $B_2$' senkrecht zur Messrichtung X' mittels einer Spindel SP' verschiebbar ist. Der Vorsprung D' dient als Drehpunkt für das Schwenkelement S' und erlaubt bei einer Verschiebung des Einstellelements ST' mittels der Spindel SP' ein Einstellen des Schwenkverhältnisses a'/b' des Schwenkelements S'. Das andere Ende $M_1$' des Massbandes M' ist mittels einer Spannvorrichtung in Form einer Spannschraube C' am ersten Befestigungselement $B_1$ gelagert, während das Befestigungselement $B_2$' so am Schlitten 2' angebracht ist, dass es spielfrei über das Schwenkelement S' mit dem Gehäuse G' und dem Massband M' verbunden ist. Zur Kapselung gegen Verunreinigungen ist zwischen dem Befestigungselement $B_2$' und dem Ende $G_2$' des Gehäuses G' ein Balg H' angeordnet.

Das Massband M' ist bei der Fertigung kürzer hergestellt als es der wahren Messlänge entspricht; d.h. die Gitterkonstante der Teilung T' ist gegenüber der richtigen Gitterkonstanten verkleinert. Dieses verkürzte Massband M' wird nun in der Längenmesseinrichtung L' mittels der Spannschraube C' auf die richtige Messlänge bei der Bezugstemperatur, z.B. der Umgebungstemperatur oder der Temperatur des Werkstücks, gedehnt. Bei einer Erwärmung des Schlittens 2 gegenüber der Temperatur des Werkstücks beim Betrieb der Werkzeugmaschine erfahren auch das Gehäuse G' und das Massband M' die gleiche Temperaturerhöhung. Da das Gehäuse G' aber einen wesentlich grösseren thermischen Ausdehnungskoeffizienten gegenüber demjenigen des Schlittens 2' besitzt, verschiebt sich das Ende $G_2$' des Gehäuses G' in positiver X'-Richtung relativ zum Drehpunkt D' des Einstellelements ST', so dass infolge der Schwenkbewegung des Schwenkelements S' das Massband M' eine «Stauchung» erfährt, um die thermische Längenzunahme zu kompensieren.

Durch die Schwenkbewegung des Schwenkelements S' wird also die zur Dehnung erforderliche Zugspannung im Massband M' in dem Masse reduziert, dass die durch die Temperaturerhöhung hervorgerufene Längenänderung wieder rückgängig gemacht wird, so dass beim Massband M' bei Temperaturänderungen stets die ursprüngliche Messlänge erhalten bleibt. Das richtige Schwenkverhältnis ist durch $a'/b' = (\alpha'_G - \alpha'_S)/\alpha_S'$ gegeben, wobei $\alpha'_G$ der thermische Ausdehnungskoeffizient des Gehäuses G' als Dehnelement und $\alpha'_S$ der thermische Ausdehnungskoeffizient des Schlittens 2' bedeuten. Mit a' sind der Abstand zwischen dem Gelenk $U_1$' und dem Drehpunkt D' und mit b' der Abstand des Gelenks $U_2$' vom Drehpunkt D' senkrecht zur X'-Achse bezeichnet.

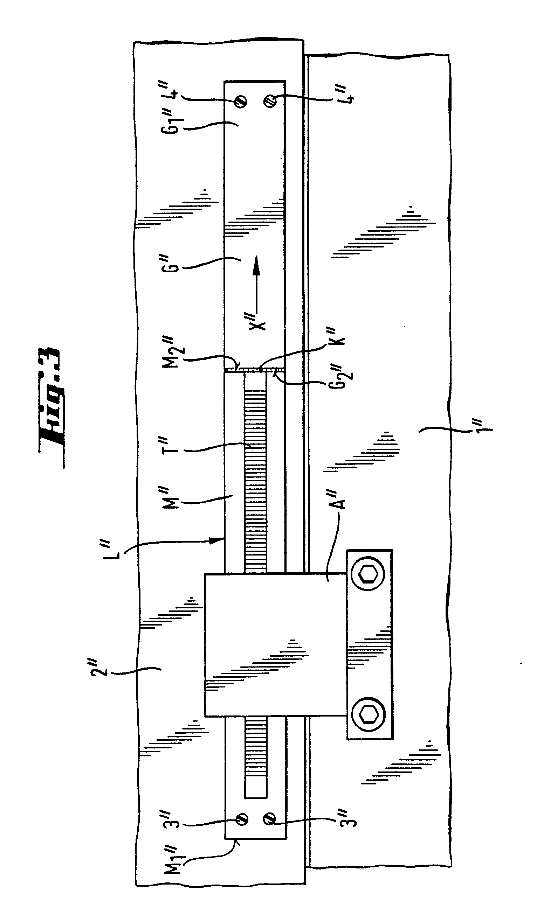

In Fig. 3 ist ein Ausschnitt einer Werkzeugmaschine mit einer Längenmesseinrichtung L'' dargestellt, deren gleichartigen Elemente die gleichen, aber oben zweifach gestrichenen Bezugszeichen aufweisen.

Die Längenmesseinrichtung L'' besteht aus einem Massstab M'' mit einer Teilung T'', der an einem Ende $M_1$'' mittels Schrauben 3'' am Schlitten 2'' befestigt ist. Das andere Ende $M_2$'' des Massstabs M'' ist über eine Klebeschicht K'' mit einem Ende $G_2$'' eines Dehnelements G'' verbunden, dessen anderes Ende $G_1$'' mittels Schrauben 4'' am Schlitten 2'' befestigt ist. Die Teilung T'' des Massstabs M'' wird von einer am Maschinenbett 1'' befestigten Abtasteinheit A'' abgetastet.

Zur Kompensation thermischer Längenänderungen des Massstabs M'' weist das Dehnelement G'' einen wesentlich grösseren thermischen Ausdehnungskoeffizienten gegenüber demjenigen des Schlittens 2'' auf; die thermische Dehnung des Dehnelements G'' ist dabei so bemessen, dass die Messlänge des Massstabs M'' bei Temperaturänderungen durch entsprechende Stauchung des Massstabs M'' unverändert erhalten bleibt. In nicht gezeigter Weise können auch mehrere Dehnelemente vorgesehen sein.

## Patentansprüche

1. Messeinrichtung zum Messen oder Einstellen der Relativlage zweier Objekte, insbesondere zweier Maschinenteile von Bearbeitungsmaschinen oder Messmaschinen, mit einem am ersten Objekt angeordneten Massstab und einer am zweiten Objekt befestigten Abtasteinheit zur Abtastung des Massstabs sowie mit einem Dehnelement, das mit dem einen Ende am ersten Objekt befestigt ist und mit dem anderen Ende mit dem Massstab verbunden ist und

**0 123 895**

dessen thermischer Ausdehnungskoeffizient sich merklich vom thermischen Ausdehnungskoeffizienten des ersten Objekts unterscheidet, dadurch gekennzeichnet, dass zur Kompensation thermischer Längenänderungen des Massstabs (M) dieser mit dem einen Ende (M₁) am ersten Objekt (2) befestigt ist, dass das Dehnelement (G) mit dem anderen Ende (G₂) mit dem anderen Ende (M₂) des Massstabs (M) verbunden ist und dass die thermische Dehnung des Dehnelements (G) so bemessen ist, dass die Messlänge des Massstabs (M) bei Temperaturänderungen unverändert erhalten bleibt.

2. Messeinrichtung nach Anspruch 1, dadurch gekennzeichnet, dass das Dehnelement (G, G') als Massstabträger für den Massstab (M, M') ausgebildet ist.

3. Messeinrichtung nach den Ansprüchen 1 und 2, dadurch gekennzeichnet, dass der als Dehnelement ausgebildete Massstabträger (G) mit einem Ende (G₁) direkt mit einem ersten Befestigungselement (B₁) am ersten Objekt (2) befestigt und mit dem anderen Ende (G₂) über ein in einem zweiten Befestigungselement (B₂) gelagertes Schwenkelement (S) mit einem Schwenkverhältnis a/b mit dem anderen Ende (M₂) des am Massstabträger (G) in Messrichtung X verschiebbaren Massstabs (M) verbunden ist, dessen eines Ende (M₁) im ersten Befestigungselement (B₁) gelagert ist, und dass das Schwenkverhältnis a/b so bemessen ist, dass die Messlänge des Massstabs (M) bei Temperaturänderungen unverändert erhalten bleibt.

4. Messeinrichtung nach Anspruch 3, dadurch gekennzeichnet, dass das eine Ende (M₁') des Massstabs (M') mittels einer Spannvorrichtung (C') am ersten Befestigungselement (B₁) befestigt ist.

5. Messeinrichtung nach Anspruch 3, dadurch gekennzeichnet, dass das Schwenkverhältnis a/b = (α_G - α_S)/α_S ist, wobei α_G den thermischen Ausdehnungskoeffizienten des Massstabträgers (G) und α_S den thermischen Ausdehnungskoeffizienten des ersten Objekts (2) bedeuten.

6. Messeinrichtung nach Anspruch 3, dadurch gekennzeichnet, dass das Schwenkverhältnis a/b des Schwenkelements (S) einstellbar ist.

7. Messeinrichtung nach Anspruch 6, dadurch gekennzeichnet, dass zur Einstellung des Schwenkverhältnisses a/b des Schwenkelements (S) im Befestigungselement (B₂) ein mittels einer Spindel (SP) senkrecht zur Messrichtung X verschiebbares Einstellelement (ST) mit einem Vorsprung (D) vorgesehen ist, der als Drehpunkt für das Schwenkelement (S) eine ebene Rückseite (R) des Schwenkelements (S) beaufschlagt.

8. Messeinrichtung nach Anspruch 4, dadurch gekennzeichnet, dass die Spannvorrichtung (C') durch eine Spannschraube gebildet ist.

**Claims**

1. Measuring device for the measurement or adjustment of the relative position of two objects, in particular of two machine parts of processing machines or measuring machines, having a scale disposed at the first object and a scanning unit, secured at the second object, for scanning the scale, as well as having an expansion element, which is secured by one of its ends at the first object and is connected by the other end to the scale and the coefficient of thermal expansion of which differs markedly from the coefficient of thermal expansion of the first object, characterized in that, in order to compensate for thermal changes in the length of the scale (M), the latter is secured by one of its ends (M₁) at the first object (2), in that the expansion element (G) is connected by the other end (G₂) to the other end (M₂) of the scale (M), and in that the thermal expansion of the expansion element (G) is dimensioned in such a manner that the measurement length of the scale (M) remains unchanged in the event of temperature changes.

2. Measuring device according to Claim 1, characterized in that the expansion element (G, G') is constructed as scale carrier for the scale (M, M').

3. Measuring device according to Claims 1 and 2, characterized in that the scale carrier (G) constructed as expansion element is secured by one of its ends (G₁) directly to a first securing element (B₁) at the first object (2) and is connected by the other end (G₂) via a pivotal element (S) which has a pivot ratio a/b and is mounted in a second securing element (B₂), to the other end (M₂) of the scale (M), which is displaceable at the scale carrier (G) in the measurement direction X and one of the ends of which (M₁) is mounted in the first securing element (B₁), and in that the pivot ratio a/b is dimensioned in such a manner that the measurement length of the scale (M) remains unchanged in the event of temperature changes.

4. Measuring device according to Claim 3, characterized in that one of the ends (M₁') of the scale (M') is secured by means of a tensioning device (C') at the first securing element (B₁).

5. Measuring device according to Claim 3, characterized in that the pivot ratio is a/b = (α_G - α_S)/α_S, where α_G represents the coefficient of thermal expansion of the scale carrier (G) and α_S represents the coefficient of thermal expansion of the first object (2).

6. Measuring device according to Claim 3, characterized in that the pivot ratio a/b of the pivotal element (S) is adjustable.

7. Measuring device according to Claim 6, characterized in that, for the adjustment of the pivot ratio a/b of the pivotal element (S), there is provided in the securing element (B₂) an adjusting element (ST), which is displaceable by means of a spindle (SP) perpendicular to the measurement direction X and is provided with a projection (D), which, as fulcrum for the pivotal element (S), acts on a flat rear surface (R) of the pivotal element (S).

8. Measuring device according to Claim 4, characterized in that the tensioning device (C') is formed by a tensioning screw.

**Revendications**

1. Dispositif de mesure ou réglage de la position relative de deux objets, notamment de deux pièces de machines d'usage ou de mesure, avec une échelle placée sur le premier objet et une unité exploratrice fixée sur le deuxième objet pour explorer ladite échelle ainsi qu'avec un élément extensible qui est fixé par une extrémité au premier objet et relié par l'autre extrémité à l'échelle et dont le coefficient de dilatation thermique diffère notablement de celui du premier objet, caractérisé par le fait que, pour compenser les variations thermiques de longueur de l'échelle (M), celle-ci est fixée par une des ses extrémités (M$_1$) au premier objet (2), que l'élément extensible (G) est relié par son autre extrémité (G$_2$) à l'autre extrémité (M$_2$) de l'échelle (M) et que la dilatation thermique dudit élément extensible (G) est calculée en sorte que la longueur de mesure de l'échelle (M) se maintienne inchangée en cas de variations de température.

2. Dispositif de mesure selon la revendication 1, caractérisé par le fait que l'élément extensible (G, G') est établi en support d'échelle pour l'échelle (M, M').

3. Dispositif de mesure selon les revendications 1 et 2, caractérisé par le fait que le support d'échelle (G) établi en élément extensible est fixé par une de ses extrémités (G$_1$) directement au premier objet (2) par un premier élément de fixation (B$_1$) et relié par son autre extrémité (G$_2$) à l'autre extrémité (M$_2$) de l'échelle (M), déplaçable en translation en direction de mesure X sur le support d'échelle (G), par un élément pivotable (S) articulé dans un deuxième élément de fixation (B$_2$) avec un rapport de pivotement a/b, la première extrémité (M$_1$) de l'échelle (M) étant articulée dans le premier élément de fixation (B$_1$) et le rapport de pivotement a/b étant calculé en sorte que la longueur de mesure de l'échelle (M) reste inchangée en cas de variations de température.

4. Dispositif de mesure selon la revendication 3, caractérisé par le fait qu'une des extrémités (M$_1$') de l'échelle (M') est fixée au premier élément de fixation (B$_1$) au moyen d'un dispositif de mise en tension (C').

5. Dispositif de mesure selon la revendication 3, caractérisé par le rapport de pivotement a/b = ($\alpha_G$ - $\alpha_S$)/$\alpha_S$, expression dans laquelle $\alpha_G$ désigne le coefficient de dilatation thermique du support d'échelle (G), et $\alpha_S$ le coefficient de dilatation thermique du premier objet (2).

6. Dispositif de mesure selon la revendication 3, caractérisé par le fait que le rapport de pivotement a/b de l'élément pivotable (S) est réglable.

7. Dispositif de mesure selon la revendication 6, caractérisé par le fait qu'il comporte, pour régler le rapport de pivotement a/b de l'élément pivotable (S) dans le deuxième élément de fixation (B$_2$), un élément de réglage (ST) déplaçable en translation perpendiculairement à la direction de mesure X par une vis et comportant un bossage (D) qui agit, en tant que centre de rotation pour l'élément pivotable (S), sur une face arrière plane (R) dudit élément pivotable (S).

8. Dispositif de mesure selon la revendication 4, caractérisé par le fait que le dispositif de mise en tension (C') est formé d'une vis de serrage.

# Fig. 1

0 123 895

Fig. 2

0 123 895

*Fig.3*

0 123 895